# EUROPÄISCHE PATENTSCHRIFT

(11) **EP 1 843 860 B1**
(45) Veröffentlichungstag und Bekanntmachung des Hinweises auf die Patenterteilung: **12.05.2010**
(21) Anmeldenummer: 05821981.7
(22) Anmeldetag: 09.12.2005
(51) Int. Cl.: B05D 5/08, B05D 7/22, C09D 179/08

(54) **PLEUEL FÜR EINEN VERBRENNUNGSMOTOR UND VERFAHREN ZUR BESCHICHTUNG SEINER GLEITLAGERFLÄCHEN**
CONNECTING ROD FOR A COMBUSTION ENGINE AND METHOD FOR COATING THE PLAIN BEARING SURFACES THEREOF
BIELLE DESTINEE A UN MOTEUR A COMBUSTION INTERNE ET PROCEDE DE REVETEMENT DE SES SURFACES DE PALIER DE GLISSEMENT

(30) Priorität: 10.12.2004 DE 102004059490; 17.11.2005 DE 102005055366
(43) Veröffentlichungstag der Anmeldung: 17.10.2007
(73) Patentinhaber: Mahle International GmbH, 70376 Stuttgart (DE)
(72) Erfinder: MAIER, Kurt, 71229 Leonberg (DE); ROSE, Reinhard, 70736 Fellbach/Schmiden (DE)
(74) Vertreter: Pohle, Reinhard
(86) Internationale Anmeldenummer: PCT/DE2005/002228
(87) Internationale Veröffentlichungsnummer: WO 2006/061012

(56) Entgegenhaltungen:
- EP-A1- 0 984 182
- DE-A1-102004 018 921
- JP-A- 7 110 025
- US-A- 3 120 346

## Beschreibung

Die Erfindung betrifft ein Pleuel für einen Verbrennungsmotor, mit einem mit einer Gleitlagerfläche versehenen kleinen Pleuelauge zur Aufnahme eines Kolbenbolzens und einem mit einer Gleitlagerfläche versehenen großen Pleuelauge, welches einen Kurbelzapfen umschließt sowie ein Verfahren zu deren Beschichtung.

Pleuel mit Direktbeschichtung eines Pleuelauges sind im Stand der Technik, beispielsweise aus der DE 197 31 625 sowie EP 0 863 322 B1, bekannt. Es wird offenbart, dass für ein Pleuellager die Montage dadurch vereinfacht werden soll, indem die Pleuellagerschalen entfallen. Dazu wird eine Lagerschicht aus Metall, insbesondere aus Aluminiumbronze, durch Plasmaspritzen direkt auf das große Pleuelauge aufgebracht, die für eine ausreichende Schmierung der Lagerstellen sorgen soll. Zur Einhaltung der Maßgenauigkeit für die Montage des Pleuels sowie der Oberflächengüte der Beschichtung ist jedoch nach wie vor eine mechanische Nachbearbeitung, beispielsweise durch Honen oder Feinspindeln, der Metallschicht notwendig, welche eine deutliche Reduzierung des Herstellungsaufwandes für derartige Pleuel nicht zulässt. In der Praxis hat sich außerdem gezeigt, dass die Metallschichten für keine ausreichende Fress- und Schmiersicherheit infolge des Verschleißes in den Lagern sorgen können, so dass die Lebensdauer der Pleuellager in derartiger Ausführungen begrenzt ist.

Aus der DE 102 03 285 C1 ist eine sinterfähige Pulvermischung, bestehend aus einem Aluminium-Basispulver und/oder deren Legierungen oder einer Gruppe von Metallen, wie Kupfer, Zinn, Lithium oder Mangan, bekannt, die zu einem Grünling gepresst, der anschließend nachverdichtet und gesintert wird, wobei auch eine Sinterschicht auf einem aus Stahl oder Guss bestehenden Bauteil aufgebracht werden kann. Eine Verbesserung der Gleiteigenschaften wird jedoch dadurch nicht erreicht, sondern nur eine Gewichtsreduzierung des Bauteils.

Ebenso sind buchsenlose Pleuel bekannt, bspw. aus der DE 101 29 559 C1, die als Gleitschicht eine Direktbeschichtung aus Bleibronze des kleines Pleuelauges aufweisen. Hier bestehen jedoch ebenso die vorgenannten Nachteile, da als Gleitschicht ebenfalls eine Metallschicht verwendet wird. Die Nachbearbeitung der Beschichtung erfordert zudem einen großen Aufwand in der Maßhaltigkeit, um eine Montage auch bei engstem Spiel von Pleuel und Kolbenbolzen, welches eine minimale Geräuschentwicklung gestattet, zu gewährleisten.

Zur Verbesserung der Reib- bzw. Gleiteigenschaft eines Bauteils ist aus der DE 39 39 704 A1 ein Schichtwerkstoff bekannt, der nach dem Aufspritzen eine unregelmäßige, fleckenartige Verteilung unterschiedlicher Dicke auf der Bauteiloberfläche erzeugen soll. Die Bereiche mit erhöhter Dicke werden dabei bevorzugt durch Füllstoffteilchen gebildet, die in dem Schichtwerkstoff beigemischt sind. Nachteilig ist hierbei jedoch, dass eine unkontrollierte ungleichmäßige Schichtdickenreduzierung durch einen Einbrennvorgang zur Trocknung erzeugt wird, durch die eine genaue Lagerspieleinstellung, beispielsweise Gleitlager, Buchsen oder Pleuel eines Verbrennungsmotors, nicht gewährleistet ist.

Es ist deshalb Aufgabe der Erfindung, ein Gleitbauteil, insbesondere Pleuel, für einen Verbrennungsmotor und Verfahren zur Beschichtung seiner Gleitlagerflächen anzugeben, mit dem hochwirksam und kostengünstig ein langfristiger Fress- und Verschleißschutz auch bei engstem Montagespiel erzielt werden kann.

Erfindungsgemäß wird die Aufgabe durch die Merkmale des unabhängigen Anspruchs 1 gelöst.

Durch das direkte Auftragen einer als Gleitlack ausgeführten selbstschmierenden Beschichtung, die aus einem thermisch aushärtbaren Harz mit darin eingelagerten Festschmierstoffpartikeln besteht, auf die Gleitlagerfläche der Pleuelaugen eines Pleuels werden im Wesentlichen folgende Vorteile erzielt:
Keine Lagerbuchsen erforderlich, um eine ausreichende Schmier- und Fresssicherheit zu erreichen;
das Aufbringen einer Haftschicht auf die Gleitlagerflächen zur Verbesserung der Haftung des Gleitlackes ist nicht erforderlich;
keine Nachbearbeitung der Oberfläche des aufgebrachten Gleitlackes zur Erzielung einer gewünschten Maßhaltigkeit, wie Schichtdicke der Beschichtung, engste Schichtdickentoleranz, Einstellung des Lagerspiels, usw., sowie der Oberflächengüte, wie Rauhigkeit, Welligkeit usw.;
verbesserte Beständigkeit infolge verbesserter Schmiereigenschaften gegenüber den bekannten Metalllegierungsschichten und damit Erzielung einer größeren Lebensdauer der Pleuellager.

In Abhängigkeit der Anforderungen können die eingelagerten Festschmierstoffpartikel jeweils aus einem oder einer Mischung von zwei der Materialien Graphit, Molybdändisulfid, Wolframdisulfid, hexagonales Bornitrid oder PTFE bestehen, wobei die ausgehärtete Beschichtung der Gleitlagerfläche 50 bis 60 Gewichts-% der Festschmierstoffpartikel enthält, um eine optimale Schmierung der Pleuellager zu gewährleisten. Die Festschmierstoffpartikel weisen dazu eine Partikelgröße von 1 bis 3 µm bei einer Schichtdicke des ausgehärteten Gleitlacks von 10-15 µm auf. Die Schichtdickentoleranz beträgt dabei max. plus/minus 1 µm, wodurch engste Montagespiele erreichbar sind.

Verfahrensmäßig wird der Gleitlack durch ein Rotationszerstäubungsverfahren auf die Gleitlagerflächen der Pleuelaugen aufgetragen, wodurch eine Beschichtung von Pleuelaugen mit auch kleineren Durchmessern erreichbar ist.

Die derart erzeugten Schichten weisen, wie vorher genannt, eine annährend konstante Schichtdicke und sehr gute Oberflächengüte auf. Ebenso ist die Tiefe des zu beschichtenden Bereiches gut abgrenzbar. Das Beschichtungsverfahren ist gegenüber den üblichen Beschichtungsarten sehr wirtschaftlich.

Vorteilhafte Weiterbildungen ergeben sich aus den Unteransprüchen.

Ausführungsbeispiele der Erfindung werden im Folgenden anhand der beigefügten Zeichnungen näher erläutert. Es zeigen:
- Fig. 1: eine Ansicht eines erfindungsgemäß beschichten Pleuels;
- Fig. 2: einen Schnitt entlang der Linie I-I gemäß Fig.1;
- Fig. 3: ein weiteres Ausführungsbeispiel eines beschichteten Pleuels gemäß Fig. 2;

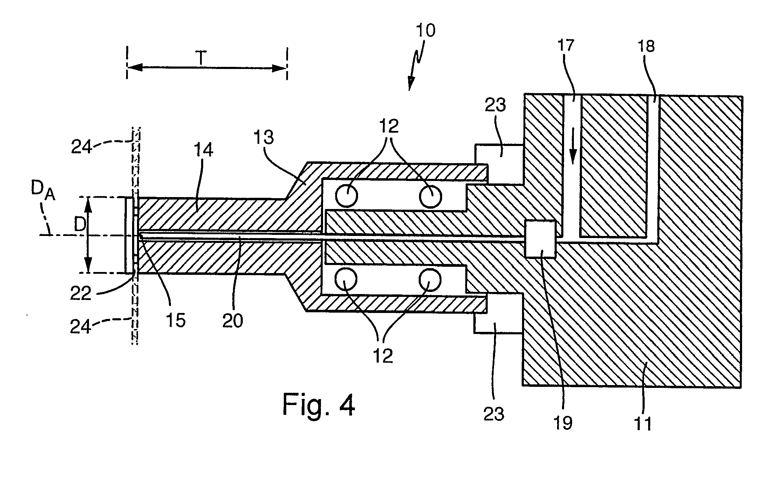

- Fig. 4: eine Vorrichtung zum Aufbringen einer Beschichtung auf die Gleitlagerflä- chen eines Pleuels.

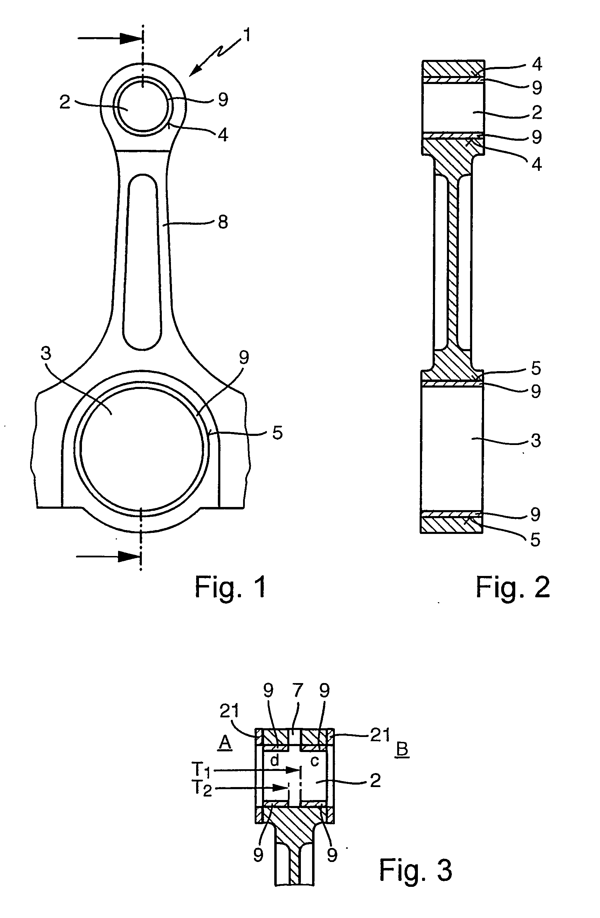

Das gemäß Figur 1 dargestellte Pleuel 1 aus Stahl weist ein kleines Pleuelauge 2 mit einer Gleitlagerfläche 4, ein Pleuelschaft 8 und ein großes Pleuelauge 3 mit einer Gleitlagerfläche 5 auf. Die Gleitlagerflächen 4 und 5 zeigen eine selbstschmierende Beschichtung 9, die aus einem thermisch ausgehärteten Harz mit darin eingelagerten Festschmierstoffpartikel - als Gleitlack bezeichnet- gebildet sind. Das Harz ist ein Polyamidimid und die Festschmierstoffpartikel bestehen jeweils aus einem oder einer Mischung von zwei der Materialien Graphit, Molybdändisulfid, Wolframdisulfid, hexagonales Bornitrid oder PTFE.

Zum Aufbringen der Beschichtung auf die Gleitlagerflächen 4 und 5 der Pleuelaugen dient eine Vorrichtung 10 zum Rotationszerstäuben. Die Vorrichtung 10 weist ein Grundkörper 11 auf, der in einen rotierbaren Düsenkörper 13, welcher mit einem Lager 12, einer Düse 14 sowie einem Düsenaustritt 15 versehen ist, übergeht. Zur Rotation des Düsenkörpers 13 dient ein Antrieb 23. Der Grundkörper 11 besitzt jeweils Zuführkanäle 17 und 18, die für den Gleitlack sowie für Druckluft bestimmt sind und in einer Mischkammer 19 zur Dosierung und Vermischung enden. Ein mit der Mischkammer 19 verbundener Auswurfkanal 20 führt senkrecht auf eine Prallplatte 16, die für die Erzeugung eines ringförmigen Spaltes 22 mit einer Breite von 0,5 mm für den Auswurf des Gleitlack- Sprühstrahls 24 beabstandet vom Düsenkörper 13 angeordnet ist.

Der Düsenkörper 13 mit seiner Düse 14 rotiert mittels des Antriebs 23 im Drehzahlbereich von 14 000 bis 18 000 Umdrehungen pro Minute, so dass durch die an der Austrittsöffnung des ringförmigen Spaltes auftretenden Fliehkräfte das Gleitlack-Druckluft-Gemisch beschleunigt wird und als scheibenförmiger Spritzstrahl 24 radial austritt. Der Düsendurchmesser D wird dabei so gewählt, dass er etwa dem halben Durchmesser dem zu beschichtenden Pleuelaugendurchmesser entspricht.

Die Vorrichtung kann bis zu der Düsentiefe T in das zu beschichtende Pleuelauge eingefahren werden. Da der Spritzstrahl in Achsrichtung schmal ist, kann die zu beschichtende Fläche in Achsrichtung durch einfaches Öffnen und Schließen der Lackzufuhr scharf begrenzt werden. Die Düsendurchmesser sind im Bereich zwischen 5 und 25 mm mit Düsentiefen bis zu 50 mm verfügbar, so dass mit der Vorrichtung große und kleine Pleuelaugen von Pleueln für praktisch alle Motortypen beschichtet werden können.

### Ausführungsbeispiel 1:

### Beschichtung im kleinen Pleuelauge:

Das Pleuel 1 wird in bekannter Weise mechanisch fertigbearbeitet. Das kleine Pleuelauge 2 wird feingebohrt auf eine Rauheit von Rz (gemittelte Rautiefe) < 6,3 µm. Der Bohrungsdurchmesser vor dem Beschichten wird dabei derart gewählt, dass der Kolbenbolzen ein diametrales Spiel von 30-40 µm erhält. Das kleine Pleuelauge kann eine ballige Formbohrung erhalten. Danach wird das Pleuel so gereinigt, dass Späne, Partikel, Bearbeitungsöle und dergleichen vollständig entfernt werden.

Zur Vorbereitung der Beschichtung werden beiderseits des Pleuelauges Abdeckschablonen 21 angebracht, die der Außenkontur des kleinen Pleuelauges angepasst sind. Die Schablonen 21 verhindern eine Beschichtung der Außenseiten des Pleuels.

Der aus dem sehr temperaturbeständigen Grundharz Polyamidimid aufgebaute Gleitlack enthält als Festschmierstoff eine Mischung aus Molybdändisulfid und Graphit mit einer Partikelgröße von 1-3 µm. Die Viskosität des Gleitlacks ist derart eingestellt, dass keine Tropfenbildung, aber eine ausreichende Applizierung ermöglicht ist.

Mit einem Vorschub von 10-20 mm/sec wird die Düse zentrisch in das Pleuelauge eingeführt, so dass der Gleitlack auf das 50 bis 80 °C vorgewärmte Pleuel appliziert wird. Der Gleitlack enthält im ausgehärteten Zustand 50-60 Gew.- % Festschmierstoffe. Ohne Lackzufuhr wird die Düse anschließend zurückgefahren. Der ganze Beschichtungsvorgang erfolgt in weniger als 5 Sekunden.

Danach wird die Schicht thermisch in einem Ofen ausgehärtet, wobei das Pleuel zwischen10 bis 20 Minuten lang auf einer Temperatur von 200 °C gehalten werden muss. Die so erhaltene Schicht ist ca. 10 µm dick, wobei eine Schichtdickentoleranz von plus/minus 1 µm erreicht wird. Trotz Dickenreduzierung der Gleitschicht infolge Schrumpfung der Schicht wird ein enges diametrales Bolzenspiel erreicht, welches 10 - 20 µm. beträgt.

### Ausführungsbeispiel 2:

### Beschichtung im kleinen Pleuelauge mit Schmierölbohrung:

Das Pleuel wird im wesentlichen gemäß Ausführungsbeispiel 1 bearbeitet und gereinigt. Nur der Pleuelaugendurchmesser wird auf ein diametrales Kolbenbolzenspiel vor dem Beschichten von 20-30 µm ausgelegt.

Zur Vorbereitung der Beschichtung werden beiderseits des Pleuelauges Abdeckschablonen 21 angebracht, die der Außenkontur des kleinen Pleuelauges angepasst sind. Die Schablonen 21 verhindern eine Beschichtung der Außenseiten des Pleuels.

Der aus dem sehr temperaturbeständigen Grundharz Polyamidimid aufgebaute Gleitlack enthält als Festschmierstoff Graphit mit einer Partikelgröße von 1-3 µm. Die Viskosität des Gleitlacks ist derart eingestellt, dass keine Tropfenbildung, aber eine ausreichende Applizierung ermöglicht ist.

Die mittig im kleinen Pleuelauge 2 angebrachte Schmierölbohrung 7 soll durch den Geleitlack nicht zugesetzt werden. Aus diesem Grund, und damit das Schmieröl sich besser in dem Spalt zwischen Pleuelauge und Kolbenbolzen verteilen kann, wird die Beschichtung im Bereich der Schmierölbohrung in Form einer radial umlaufenden "Schmierrille" ausgespart, entsprechend Darstellung nach Fig. 3. Ebenso sind eine oder mehrere parallel zur Achse der Pleuelaugen verlaufende Schmierrillen oder auch eine Kombination davon, durch Verwendung entsprechender Masken realisierbar. Zur Beschichtung wird die Vorrichtung 11 verwendet.

Die Düse 14 wird an einer Pleuelseite (A) angesetzt und ohne Gleitlackzufuhr bis zur Tiefe T1 des kleinen Pleuelauges 2 eingefahren. Danach wird der Gleitlack im Bereich (C) aufgetragen. Im Bereich der Abdeckschablone 21 auf der Pleuelseite (B) wird die Lackzufuhr abgestellt, und der in der Düse verbleibende Lackrest wird auf die Schablone abgesprüht. Anschließend wird die Düse 14 ohne Lackzufuhr bis zur Tiefe T2 zurück bewegt und von dort aus der Bereich (D) mit Gleitlack besprüht. Der Gleitlackrest wird auf der Pleuelseite A im Bereich der Abdeckschablone 7 abgesprüht. Die Applizierung des Gleitlackes erfolgt auf das 50 bis 80°C vorgewärmte Pleuel.

Danach wird die Schicht thermisch in einem Ofen ausgehärtet, wobei das Pleuel zwischen 10 bis 20 Minuten lang auf einer Temperatur von 200°C gehalten werden muss. Die so erhaltene Schicht ist ca. 10 µm dick, wobei eine Schichtdickentoleranz von plus/minus 1 µm erreicht wird. Trotz Dickenreduzierung der Gleitschicht infolge Schrumpfung der Schicht wird ein enges diametrales Bolzenspiel erreicht, welches 10 - 20 µm beträgt. Dieses enge Spiel ist besonders vorteilhaft, um Geräusche durch Bolzentickern zu vermeiden. Die Beschichtung gewährleistet, dass trotz des engen Spiels keine Fresser auftreten. Außerdem ermöglicht die Beschichtung ein Einbetten von kleinsten harten Partikeln, die in den Spalt zwischen Pleuelbohrung und Kolbenbolzen gelangen können.

### Ausführungsbeispiel 3:

### Beschichtung im kleinen Pleuelauge eines phosphatierten Pleuels:

Das Pleuel wird gemäß Ausführungsbeispiel 1 bearbeitet und gereinigt. Der Pleuelaugendurchmesser vor dem Beschichten wird derart gewählt, dass der Kolbenbolzen ein diametrales Spiel von 30-40 µm erhält.

Danach wird die obere Hälfte des Pleuels 1 phosphatiert. Als Phosphatierungslösung wird ein handelsübliches Phosphatierbad, nämlich Gardobond G 4098 der Fa. Chemetall, Frankfurt, eingesetzt. Dieser Phosphatierprozeß erzeugt eine ca. 5 µm dicke Schicht, bestehend aus Eisen-Mangan-Phosphat. Die Schicht dient einerseits als Haftgrundlage für die Lackierung, andererseits weist sie gute Gleit- und Trenneigenschaften auf und dient somit zusammen mit der Gleitlackbeschichtung dazu, ein Fressen des Bolzens im kleinen Pleuelauge zu verhindern.

Um die obere Hälfte des Pleuels zu phosphatieren, wird das Pleuel mithilfe eines geeigneten Gestells nur halb in die Phosphatierungslösung eingetaucht.

Die Beschichtung mit Gleitlack und Aushärten erfolgen entsprechend Ausführungsbeispiel 1. Die Schichtdicke des Gleitlackes beträgt ebenfalls 10 µm bei einer max. Schichtdickentoleranz von plus/minus 1 µm. Damit beträgt das diametrale Bolzenspiel (nach der Beschichtung) 0,1- 10 µm. Trotz des engen Spiels ist die Pleuel-Bolzen-Paarung durch die doppelte Beschichtung wirksam gegen Fresser geschützt.

Zur Durchführung des Beschichtungsverfahrens eignet sich auch ein Schleuderapparat S-520 der Firma Sprimag, Kirchheim.

### Bezugszeichen

- 1: Pleuel
- 2: kleines Pleuelauge
- 3: großes Pleuelauge
- 4: Gleitlagerfläche für kleines Pleuelauge
- 5: Gleitlagerfläche für großes Pleuelauge
- 6: Beschichtung
- 7: Schmierölbohrung
- 8: Pleuelschaft
- 9: Beschichtung, selbstschmierend (Gleitlack)
- 10: Vorrichtung zum Rotationszerstäuben
- 11: Grundkörper
- 12: Lager für Düsenkörper
- 13: Düsenkörper
- 14: Düse
- 15: Düsenaustritt
- 16: Prallplatte
- 17: Zuführkanal für Gleitlack
- 18: Zuführkanal für Druckluft
- 19: Mischkammer
- 20: Auswurfkanal
- 21: Schablone
- 22: Spalt
- 23: Antrieb
- 24: Sprühstrahl
- D: Düsendurchmesser
- T: Düsentiefe
- Da: Düsenachse

## Patentansprüche

1. Pleuel (1) für einen Verbrennungsmotor, mit einem mit einer Gleitlagerfläche (4) versehenen kleinen Pleuelauge (2) zur Aufnahme eines Kolbenbolzens und einem mit einer Gleitlagerfläche (5) versehenen großen Pleuelauge (3), welches einen Kurbelzapfen umschließt,
**dadurch gekennzeichnet,**
**dass** zumindest eine der Gleitlagerflächen (4, 5) eine direkt mit dem Pleuelmaterial verbundene selbstschmierende Beschichtung (9) aus einem thermisch ausgehärteten Harz mit darin eingelagerten Festschmierstoffpartikel aufweist.

2. Pleuel nach Anspruch 1, **dadurch gekennzeichnet, dass** das Harz ein Polyamidimid ist, und dass die Festschmierstoffpartikel jeweils aus einem oder einer Mischung von zwei der Materialien Graphit, Molybdändisulfid, Wolframdisulfid, hexagonales Bornitrid oder PTFE bestehen.

3. Pleuel nach Anspruch 2, **dadurch gekennzeichnet, dass** die Beschichtung der Gleitlagerfläche 50 bis 60 Gewichts-% Festschmierstoffpartikel enthält, wobei die Festschmierstoffpartikel eine Partikelgröße von 1 bis 3 µm aufweisen.

4. Pleuel nach einem der Ansprüche, **dadurch gekennzeichnet, dass** die Schichtdicke der Beschichtung 10-15 µm beträgt.

5. Pleuel nach Anspruch 4, **dadurch gekennzeichnet, dass** die Schichtdicke eine Toleranz von +/- 1 µm beträgt.

6. Pleuel nach einem der Ansprüche, **dadurch gekennzeichnet, dass** die Gleitfläche des kleinen Pleuelauges beschichtet ist.

## Claims

1. Connecting rod (1) for an internal combustion engine having a small connecting rod eye (2) provided with a slide-bearing surface (4) for receiving a piston pin and a large connecting rod eye (3) provided with a slide-bearing surface (5) which encloses a crankshaft journal,
**characterised in that**,
at least one of said slide-bearing surfaces (4, 5) features a self-lubricating coating (9) of thermally-cured resin with solid lubricant particles embedded therein, said coating being directly connected to the connecting rod material.

2. Connecting rod according to claim 1, **characterised in that** the resin is a polyamide-imide and that the respective solid lubricant particles each consist of one, or a mixture of two of the materials graphite, molybdenum disulphide, tungsten disulphide, hexagonal boron nitride or PTFE.

3. Connecting rod according to claim 2, **characterised in that** the coating of the slide-bearing surfaces contains 50 to 60 % by weight of solid lubricant particles, wherein the solid lubricant particles have a particle size of 1 to 3 µm.

4. Connecting rod according to any one of the preceding claims, **characterised in that** the coating layer thickness is in the range of 10-15 µm.

5. Connecting rod according to claim 4, **characterised in that** the layer thickness has a tolerance of +/-1 µm.

6. Connecting rod according to any one of the preceding claims, **characterised in that** the sliding surface of the small connecting rod eye is coated.

## Revendications

1. Bielle (1) pour moteur à combustion interne, comportant un pied de bielle (2) doté d'une surface de palier lisse (4) pour loger un axe de piston et une tête de bielle (3) dotée d'une surface de palier lisse (5), qui entoure un maneton,
**caractérisée,**
**en ce qu**'au moins l'une des surfaces de palier lisse (4, 5) présente un revêtement autolubrifiant (9) relié directement au matériau de bielle et constitué d'une résine thermodurcie contenant des particules de lubrifiant solide incorporées.

2. Bielle selon la revendication 1, **caractérisée en ce que** la résine est un polyamideimide et **en ce que** les particules de lubrifiant solide sont respectivement constituées de graphite, de bisulfure de molybdène, de bisulfure de tungstène, de nitrure de bore hexagonal ou de PTFE, ou d'un mélange de deux de ces matériaux.

3. Bielle selon la revendication 2, **caractérisée en ce que** le revêtement de la surface de palier lisse contient de 50 à 60 % en poids de particules de lubrifiant solide, les particules de lubrifiant solide présentant une taille de particules de 1 à 3 µm.

4. Bielle selon l'une quelconque des revendications précédentes, **caractérisée en ce que** l'épaisseur de couche du revêtement est de 10 à 15 µm.

5. Bielle selon la revendication 4, **caractérisée en ce que** l'épaisseur de couche a une tolérance de +/- 1 µm.

6. Bielle selon l'une quelconque des revendications précédentes, **caractérisée en ce que** la surface de palier lisse du pied de bielle est revêtue.
